# EUROPEAN PATENT APPLICATION

(11) **EP 4 418 283 A1**
(43) Date of publication of application: **21.08.2024**
(21) Application number: 23157544.0
(22) Date of filing: 20.02.2023
(51) Int. Cl.: H01B 7/14, H01B 7/18

(54) **SUBMARINE POWER CABLE WITH FLUID TRANSPORT CAPABILITY**

(71) Applicant: NKT HV Cables AB, 371 60 Lyckeby (SE)
(72) Inventor: KARATSIVOS, Evripidis, Karlskrona (SE)
(74) Representative: Kransell & Wennborg KB

(57) **Abstract**

A submarine power cable (1) comprising: a plurality of power cores (3a-3c), each comprising a conductor (5a-5c), and an insulation system (7a-7c) arranged around the conductor (5a-5c), wherein the insulation system (7a-7c) comprises an inner semiconducting layer (9a-9c) arranged around the conductor (5a-5c), an insulation layer (11a-11c) arranged around the inner semiconducting layer (9a-9c), an outer semiconducting layer (13a-13c) arranged around the insulation layer (11a-11c), an outer layer (23) arranged around the plurality of power cores (3a-3c), and a filler profile (16a, 16b, 16c) arranged in a space between two of the power cores (3a-3c) and the outer layer (23), and a fluid channel (18a, 18b, 18c) arranged inside the filler profile (16a, 16b, 16c), wherein the fluid channel (18a, 18b, 18c) extends along the entire length of the filler profile (16a, 16b, 16c) for transporting fluid from one end of the submarine power cable (1) to an opposite end of the submarine power cable (1).

## Description

### TECHNICAL FIELD

The present disclosure generally relates to submarine power cables.

### BACKGROUND

Submarine power cables can be used for transporting electricity from offshore renewable energy sources such as offshore wind turbines. Since renewables are not plannable energy sources, electrolysers can be used to produce hydrogen utilising excess electricity from the renewable energy source at times when weather conditions permit. The hydrogen is stored and can be converted to electricity when the renewables are unable to generate electricity due to changed weather conditions. For this purpose, it has been proposed to transport electricity and hydrogen in the same structure.

EP3926645 discloses an umbilical for combined transport of electric current and hydrogen. The umbilical comprises a plurality of tubular conductors, wherein the internal volume of the tubular conductors forms a transport pipe for hydrogen, such as in connection to offshore wind power production. Drawbacks with this design are that in addition to losing cross-sectional area for electricity transport, the configuration reduces the mechanical strength of the conductors, especially at a joint. This may especially be problematic if the cable is to be installed at significant depths because the conductors are subjected to substantial tensional forces when suspended from the cable laying vessel to the seabed even if the cable is armoured.

EP3913268 discloses an umbilical cable for transportation of electric power and hydrogen. The umbilical cable comprises at least one electrical conductor and at least one tube for transporting hydrogen. The hydrogen tube has a wall made of a material resistant to hydrogen embrittlement, in particular a copper alloy. A drawback with this structure is that it requires substantial reconfiguration of a production line specifically adapted for manufacturing submarine power cables that only transport electric power.

### SUMMARY

In view of the above an object of the present disclosure is to provide a submarine power cable which solves or at least mitigates the problems of the prior art.

There is hence according to a first aspect of the present disclosure provided a submarine power cable comprising: a plurality of power cores, each comprising a conductor, and an insulation system arranged around the conductor, wherein the insulation system comprises an inner semiconducting layer arranged around the conductor, an insulation layer arranged around the inner semiconducting layer, an outer semiconducting layer arranged around the insulation layer, an outer layer arranged around the plurality of power cores, and a filler profile arranged in a space between two of the power cores and the outer layer, and a fluid channel arranged inside the filler profile, wherein the fluid channel extends along the entire length of the filler profile, for transporting fluid from one end of the submarine power cable to an opposite end of the submarine power cable.

Filler profiles are used to ensure that the shape of a submarine power cable stays intact when subjected to e.g., a radial force, for example during installation. By providing a submarine power cable with a filler profile that has a fluid channel, minimal adaptation of the production line of an electricpower only submarine power cable is required to enable fluid transportation, such as hydrogen gas or liquid hydrogen transportation, by means of the submarine power cable.

The fluid channel may be configured for transportation of liquid hydrogen or hydrogen gas.

The submarine power cable may be a high voltage power cable. The submarine power cable may for example have a voltage rating of 66 KV or higher.

The submarine power cable may be an export cable.

The submarine power cable may according to one example have a total length of at most 100 km.

According to one embodiment the fluid channel has an inner surface that is closed along the entire length of the filler profile.

The inner surface defines the fluid channel and is thus free of any deliberately made through-openings that extend into the fluid channel. The fluid channel is essentially fluid-tight, especially with respect to hydrogen, except for some natural permeation that may occur through the wall(s) of the filler profile.

According to one embodiment in cross section of the submarine power cable, the filler profile has an outer circumferential boundary that includes two inner arcs, each receiving a portion of a respective one of the two power cores, and an outer arc which is curved towards the outer layer.

According to one embodiment the outer circumferential boundary forms a closed curve.

According to one embodiment the fluid channel is arranged centred relative to the two inner arcs and the outer arc. This is the region where the filler profile has its largest thickness, and thus the cross-sectional area of the fluid channel may be maximised, providing higher flow throughput and lower turbulence.

According to one embodiment the filler profile is made of a polymeric material.

According to one embodiment the polymeric material is polyethylene.

According to one embodiment the polyethylene is low density, medium density, or high-density polyethylene.

According to one embodiment the filler profile is an extruded filler profile. The filler profile could alternatively be composed of stranded yarns and a pipe arranged within the stranded yarns, or it could be made by additive manufacturing.

According to one embodiment the plurality of power cores and the filler profile are stranded.

According to one embodiment the fluid channel is integral with the filler profile or wherein the submarine power cable comprises a fluid pipe and the filler profile comprises an axial through-opening, wherein the fluid pipe is arranged in the axial through-opening and forms the fluid channel.

With integral is meant that the fluid channel is defined by an axial channel formed by an inner wall or walls of the filler profile. The fluid channel is thus formed by the body of the filler profile.

The axial through-opening extends along the entire length of the filler profile.

The fluid pipe may extend along the entire axial through-opening.

Each filler profile may according to one example comprise a respective axial through-opening and fluid pipe.

The fluid pipe may for example be made of metal. The metal may for example comprise stainless steel, copper, or a copper alloy.

There is according to a second aspect provided a method of operating a submarine power cable as claimed in any of the preceding claims, the method comprising: a) transporting electricity by means of the plurality of power cores, and b) transporting fluid through the fluid channel.

According to one embodiment the fluid is hydrogen gas or liquid hydrogen.

One embodiment comprises performing step a) and b) simultaneously.

Transporting fluid simultaneously with electricity may provide cooling of the plurality of the power cores by means of the fluid.

According to one embodiment step b) involves transporting the fluid in the fluid channel with a pressure of up to 500 mbar, such as up to 400 mbar, such as up to 250 mbar. The fluid may for example be transported under a pressure of 250 mbar, 400 mbar, or 500 mbar.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a cross-sectional view of an example of a submarine power cable;
Fig. 2 shows a cross-sectional view of an example of a filler profile;
Fig. 3 shows an offshore installation including the submarine power cable in Fig. 1; and
Fig. 4 is a flowchart of a method of operating the submarine power cable in Fig. 1.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

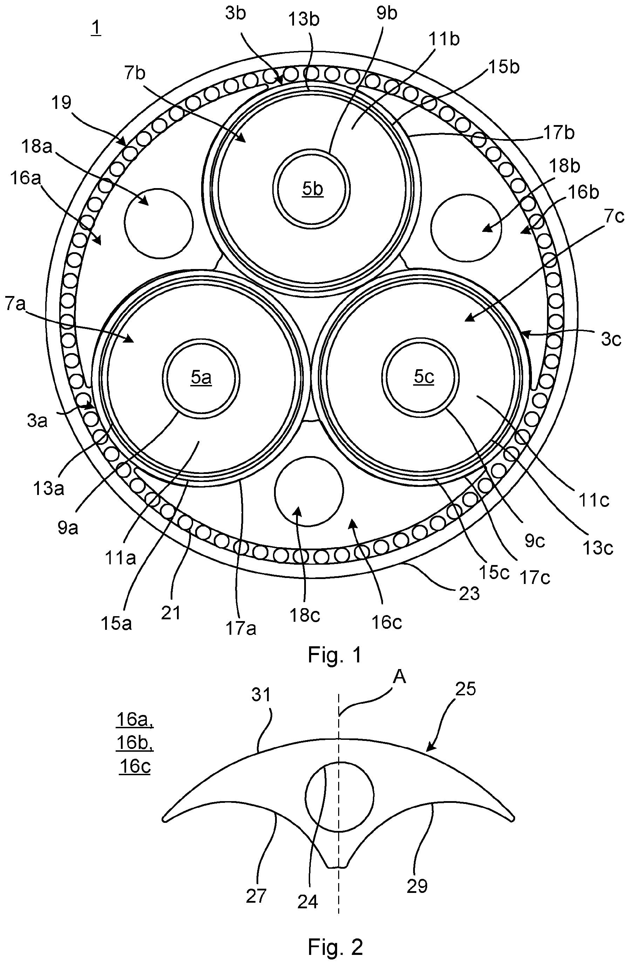

Fig. 1 shows a cross-sectional view of an example of a submarine power cable 1.

The submarine power cable 1 may be an AC power cable or a DC power cable comprising two power cores that form electric poles and a third core that may be a redundant power core or a dummy core.

The exemplified submarine power cable 1 comprises three power cores 3a-3c. The power cores 3a-3c are stranded.

Each power core 3a-3c comprises a respective conductor 5a-5c.

Each power core 3a-3c comprises an insulation system 7a-7c arranged around the respective conductor 5a-5c.

Each insulation system 7a-7c comprises an inner semiconducting layer 9a-9c arranged around the conductor 5a-5c, an insulation layer 11a-11c arranged around the inner semiconducting layer 9a-9c, and an outer semiconducting layer 13a-13c arranged around the insulation layer 11a-11c.

The insulation layer 11a-11c comprises a polymeric material. The polymeric material may for example comprise a polyolefin such as a crosslinked polyolefin, e.g., crosslinked polyethylene (XLPE), or a thermoplastic polyolefin such as polypropylene, or a polyolefin elastomer such as ethylene propylene rubber (EPR), or ethylene propylene diene monomer (EPDM) rubber.

The inner semiconducting layer 9a-9c and the outer semiconducting layer 13a-13c may comprise polymeric material mixed with conductive particles such as carbon black.

The insulation system 7a-7c may be an extruded insulation system, for example a triple extruded insulation system.

Each power core 3a-3c may further comprise a respective metallic water blocking layer 15a-15c arranged around the insulation system 7a-7c. The metallic water blocking layer 15a-15c may for example comprise stainless steel, copper, aluminium, or lead.

Each power core 3a-3c may comprise a respective polymeric sheath 17a-17c arranged around the insulation system 7a-7c. If the power cores 3a-3c comprise the metallic water blocking layer 15a-15c, the polymeric sheath 17a-17c is arranged around the metallic water blocking layer 15a-15c.

The submarine power cable 1 comprises a plurality of filler profiles 16a-16c. In the case of a three-core submarine power cable, the submarine power cable 1 comprises three filler profiles 16a-16c.

One or more of the filler profiles 16a-16c comprises a respective fluid channel 18a-18c. In the example in Fig. 1, all the filler profiles 16a-16c comprises a fluid channel 18a-18c.

The filler profiles 16a-16c are stranded together with the power cores 3a-3c.

Each filler profile 16a-16c is received partly in an interstice between two adjacent power cores 3a-3c.

The submarine power cable 1 may comprise an armour layer 19 comprising a plurality of armour wires 21 arranged helically around the three stranded power cores 3a-3c.

The submarine power cable 1 may comprise an armour bedding layer (not shown) arranged between the armour layer 19 and the power cores 3a-3c. Each filler profile 3a-3c may be arranged between the armour bedding layer and two power cores 3a-3c.

The submarine power cable 1 comprises an outer layer 23, which forms the outermost layer of the submarine power cable 1. The outer layer 23 may be an outer sheath comprising a polymeric material or an outer serving composed of helically wound polymeric yarns.

Turning now to Fig. 2, the filler profile 16a-16c will be described in more detail. The design may concern one, two, or all three of the filler profiles 16a-16c.

In cross-section, the filler profile 16a-16c has an outer circumferential boundary 25 that forms a closed curve. The filler profile 16a-16c thus has a perimeter without any through-openings into the interior of the filler profile 16a-16c. The fluid channel 18a-18c is a radially closed channel along the entire length of the filler profile 16a-16c. The inner surface 24 of the fluid channel 18a-18c is thus free from through-openings along the entire length of the filler profile 16a-16c and the fluid channel 18a-18c is thus closed in the circumferential direction of the fluid channel 18a-18c at any cross-section taken through the longitudinal axis of the filler profile 16a-16c.

In cross-section of the filler profile 16a-16c, the outer circumferential boundary 25 has two inner arcs 27 and 29, each configured to receiving a portion of a respective one of two of the power cores 3a-3c. The outer circumferential boundary 25 also has an outer arc 31. The outer arc 31 is larger than each of the two inner arcs 27, 29. The outer arc 31 connects the two inner arcs 27 and 29. The outer arc 31 is curved towards the outer layer 23.

The fluid channel 18a-18c may be arranged centred relative to the two inner arcs 27, 29 and the outer arc 31. The fluid channel 18a-18c may have its centre point contained in a central axis A of the filler profile 16a-16c, which divides the filler profile 16a-16c in two symmetric halves, and which may coincide with a radial direction of the submarine power cable 1.

The fluid channel 18a-18c may for example have a circular, elliptical, or polygonal cross-sectional shape.

The filler profile 16a-16c may be made of a polymeric material. The polymeric material may be polyethylene such as low density, medium density, or high-density polyethylene, polyvinylchloride (PVC), or polypropylene.

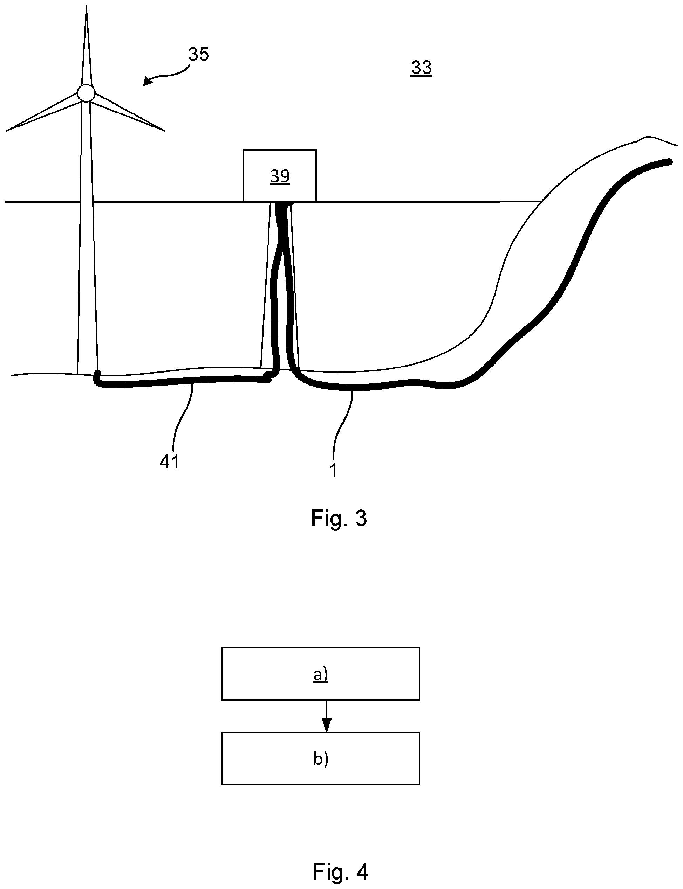

Fig. 3 shows an example of an offshore installation 33 comprising the submarine power cable 1. The offshore installation 33 comprises offshore wind turbines, such as wind turbine 35, and an offshore substation 39 connected to the wind turbines by means of array cables, such as array cable 41. The submarine power cable 1 is connected to the offshore substation 39 and extends on or under the seabed from the offshore substation 30 to shore, i.e., the landfall. The submarine power cable 1 is thus in this example an export cable. The offshore substation 39 may comprise an electrolyser system that is powered by electricity delivered by the array cables 41 from the wind turbines, and which generates hydrogen gas and/or liquid hydrogen. The hydrogen gas or liquid hydrogen is transported from the offshore substation 39 to shore by means of the submarine power cable 1 through the one or more fluid channels 18a-18c.

A method of operating the submarine power cable 1 will now be described with reference to Fig. 4. According to the example, the operation of the submarine power cable 1 comprises energy transportation of electricity and fluid.

In a step a) electricity is transported by means of the plurality of power cores 3a-3c.

In a step b) fluid is transported through one or more of the fluid channels 18a-18c of the filler profile 16a-16c. The fluid may typically be hydrogen gas or liquid hydrogen.

One end of the submarine power cable 1, which is terminated at an offshore structure, such as the offshore substation 39, may be connected to an electrolyser system provided on the offshore structure. In particular, the fluid channel(s) 18a-18c may be connected to a hydrogen outlet of the electrolyser system.

Steps step a) and b) may be performed simultaneously. The fluid transported through the one or more fluid channels 18a-18c may thus provide cooling of the power cores 3a-3c.

According to one variation, one or more of the filler profiles 16a-16c may comprise an axial through-opening and a fluid pipe arranged in the through-opening, which forms the fluid channel 18a-18c. Fluid, such as hydrogen gas or liquid hydrogen, will in this example flow through the fluid pipe.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

**1.** A submarine power cable (1) comprising:
a plurality of power cores (3a-3c), each comprising a conductor (5a-5c), and an insulation system (7a-7c) arranged around the conductor (5a-5c), wherein the insulation system (7a-7c) comprises an inner semiconducting layer (9a-9c) arranged around the conductor (5a-5c), an insulation layer (11a-11c) arranged around the inner semiconducting layer (9a-9c), and an outer semiconducting layer (13a-13c) arranged around the insulation layer (11a-11c),
an outer layer (23) arranged around the plurality of power cores (3a-3c),
a filler profile (16a, 16b, 16c) arranged in a space between two of the power cores (3a-3c) and the outer layer (23), and
a fluid channel (18a, 18b, 18c) arranged inside the filler profile (16a, 16b, 16c), wherein the fluid channel (18a, 18b, 18c) extends along the entire length of the filler profile (16a, 16b, 16c) for transporting fluid from one end of the submarine power cable (1) to an opposite end of the submarine power cable (1).

**2.** The submarine power cable (1) as claimed in claim 1, wherein the fluid channel (18a, 18b, 18c) has an inner surface (24) that is closed along the entire length of the filler profile (16a, 16b, 16c).

**3.** The submarine power cable (1) as claimed in claim 1 or 2, wherein in cross section of the submarine power cable (1), the filler profile (16a, 16b, 16c) has an outer circumferential boundary (25) that includes two inner arcs (27, 29), each receiving a portion of a respective one of the two power cores (3a-3c), and an outer arc (31) which is curved towards the outer layer (23).

**4.** The submarine power cable (1) as claimed in claim 3, wherein the outer circumferential boundary (25) forms a closed curve.

**5.** The submarine power cable (1) as claimed in any of the preceding claims, wherein the fluid channel (18a, 18b, 18c) is arranged centred relative to the two inner arcs (27, 29) and the outer arc (31).

**6.** The submarine power cable (1) as claimed in any of the preceding claims, wherein the filler profile (16a, 16b, 16c) is made of a polymeric material.

**7.** The submarine power cable (1) as claimed in any of claims 6, wherein the polymeric material is polyethylene.

**8.** The submarine power cable (1) as claimed in claim 7, wherein the polyethylene is low density, medium density, or high-density polyethylene.

**9.** The submarine power cable (1) as claimed in any of the preceding claims, wherein the filler profile (16a, 16b, 16c) is an extruded filler profile.

**10.** The submarine power cable (1) as claimed in any of the preceding claims, wherein the plurality of power cores (3a-3c) and the filler profile (16a, 16b, 16c) are stranded.

**11.** The submarine power cable (1) as claimed in any of the preceding claims, wherein the fluid channel (18a-18c) is integral with the filler profile (16a-16c) or wherein the submarine power cable (1) comprises a fluid pipe and the filler profile comprises an axial through-opening, wherein the fluid pipe is arranged in the axial through-opening and forms the fluid channel (18a-18c).

**12.** Method of operating a submarine power cable (1) as claimed in any of the preceding claims, the method comprising:
a) transporting electricity by means of the plurality of power cores (3a-3c), and
b) transporting fluid through the fluid channel (18a, 18b, 18c).

**12.** Method as claimed in claim 11, wherein the fluid is hydrogen gas or liquid hydrogen.

**14.** Method as claimed in claim 12 or 13, comprising performing step a) and b) simultaneously.

**15.** Method as claimed in any of claims 12-14, wherein step b) involves transporting the fluid in the fluid channel with a pressure of up to 500 mbar, such as up to 400 mbar, such as up to 250 mbar.
